# EUROPÄISCHE PATENTANMELDUNG

(11) **EP 1 935 935 A1**
(43) Veröffentlichungstag der Anmeldung: **25.06.2008**
(21) Anmeldenummer: 06026400.9
(22) Anmeldetag: 20.12.2006
(51) Int. Cl.: C08K 5/521, C08L 67/02, D06M 15/507

(54) **Zusammensetzung für die Behandlung von Fasermaterialien**

(71) Anmelder: Huntsman Textile Effects (Germany) GmbH, 86462 Langweid a. Lech (DE)
(72) Erfinder: Dermeik, Salman, Dr., 86157 Augsburg (DE); Braun, Reinhold, 86830 Schwabmünchen (DE); Lemmer, Karl-Heinz, 86156 Augsburg (DE)

(57) **Zusammenfassung**

Zusammensetzungen, welche Triester der Phosphorsäure und Polyester auf Basis von Carbonsäure und aromatenfreiem Alkohol enthalten, eignen sich gut für die Behandlung von Fasermaterialien. Den Fasermaterialien, z.B. Geweben, die unter anderem aus Polyester bestehen können, werden dadurch flammhemmende Eigenschaften verliehen.

## Beschreibung

Die Erfindung betrifft eine Zusammensetzung zur Behandlung von Fasermaterialien, insbesondere von textilen Fasern, Garnen oder Flächengebilden. Durch die Behandlung mit erfindungsgemäßen Zusammensetzungen lassen sich den Fasermaterialien flammhemmende Eigenschaften vermitteln.

Es ist bekannt, textile Flächengebilde aus Fasermaterialien oder Folien durch Behandlung mit Phosphorverbindungen flammhemmend auszurüsten. Dies geht unter anderem hervor aus der US 3 374 292, der DE-A 25 09 592, sowie aus den Zusammenfassungen der JP 2004-225 175 A2 und der JP 2004-225 176 A2 in Chemical Abstracts (AN 141:175439 CA und AN 141:175 440 CA).

Die aus dem Stand der Technik bekannten Zusammensetzungen weisen beim Einsatz für flammhemmende Ausrüstung von Fasermaterialien Nachteile auf.
So sind z.B. häufig relativ hohe Mengen an Phosphorverbindungen erforderlich, um akzeptablen Flammschutz zu erzielen. Dies gilt auch dann, wenn die Fasermaterialien ganz oder überwiegend aus Polyester bestehen.

Aufgabe der vorliegenden Erfindung war es, eine Zusammensetzung zur Verfügung zu stellen, welche eine gute flammhemmende Ausrüstung bei Fasermaterialien ermöglicht, die vollständig oder überwiegend aus Polyester bestehen, wobei eine gute flammhemmende Wirkung bereits bei niedrigerer Auflage der Zusammensetzung auf den Fasermaterialien erreicht werden sollte, als bei bekannten Ausrüstungen mit Phosphorverbindungen. Eine weitere Aufgabe bestand darin, ein Verfahren zur Behandlung von Fasermaterialien, insbesondere solchen aus Polyester, zu entwickeln, welches zu guten flammhemmenden Eigenschaften oder behandelten Fasermaterialien führt.

Die Aufgabe wurde gelöst durch eine Zusammensetzung, welche mindestens eine Komponente A und eine Komponente B enthält,
wobei Komponente A ein Triester der Phosphorsäure ist,
und wobei Komponente B ein Polyester ist, welcher keine aromatischen Reste in der vom Alkohol stammenden Einheit enthält und wobei 0 bis 10 % der von der Säure stammenden Einheiten aromatische Reste enthalten und durch ein Verfahren zur Behandlung von Fasermaterialien, bei dem man eine Zusammensetzung der genannten Art auf die Fasermaterialien aufbringt.

Durch die Behandlung mit erfindungsgemäßen Zusammensetzungen lassen sich gute flammhemmende Eigenschaften bei Fasermaterialien erzielen. Die Fasermaterialien können Fasern oder Garne sein; vorzugsweise sind sie textile Flächengebilde in Form von Geweben oder Vliesen (nonwovens). Mit erfindungsgemäßen Zusammensetzungen lassen sich gute flammhemmende Eigenschaften auch auf Fasermaterialien erzielen, die zu 80 bis 100 Gew% aus Polyester, insbesondere aus Polyethylenterephthalat oder Polybutylenterephthalat, bestehen. Die Behandlung solcher Polyestermaterialien stellt eine bevorzugte Verwendung erfindungsgemäßer Zusammensetzungen dar. Es können jedoch auch andere Fasermaterialien flammhemmend ausgerüstet werden, z.B. solche aus Wolle oder aus Fasermischungen, die weniger als 80 Gew% Polyester enthalten.

Ein besonderer Vorteil erfindungsgemäßer Zusammensetzungen besteht darin, dass es bei ihrer Verwendung für die Behandlung von Fasermaterialien möglich ist, bereits mit geringeren als den im Stand der Technik üblichen Auflagemengen an Phosphorverbindungen auf dem Fasermaterial gute flammhemmende Eigenschaften zu erzielen. Dies ist offensichtlich auf eine synergistische Wirkung zwischen den beiden Komponenten erfindungsgemäßer Zusammensetzungen (Komponenten A und B) zurückzuführen, denn die erzielbare flammhemmende Wirkung ist deutlich höher als bei Verwendung von Komponente A alleine oder von Komponente B alleine. Diese synergistische Wirkung ist für den Fachmann unerwartet und überraschend, vor allem auch deshalb, weil bei Verwendung von Komponente B alleine eine flammhemmende Wirkung überhaupt nicht zu erzielen ist.
Ein weiterer Vorteil erfindungsgemäßer Zusammensetzungen liegt darin, dass sowohl Komponente A als auch Komponente B unter halogenfreien Verbindungen ausgewählt werden können und trotzdem gute flammhemmende Wirkung erzielt werden kann. Bei halogenhaltigen Zusammensetzungen, die aus dem Stand der Technik bekannt sind, können sich demgegenüber Nachteile ergeben, die dem Fachmann bekannt sind.

Erfindungsgemäße Zusammensetzungen enthalten mindestens eine Komponente A und mindestens eine Komponente B. Sie können auch Gemische von Verbindungen enthalten, welche unter die unten genannte Definition von Komponente A fallen, und/oder Gemische von Verbindungen, welche unter die unten genannte Definition von Komponente B fallen. Ferner können sie zusätzlich weitere Produkte enthalten, welche weder unter die Definition von Komponente A noch unter Definition von Komponente B fallen. Solche Produkte sind beispielsweise bekannte Weichgriffmittel für Textilien, Tenside, Carrier, Diffusionsbeschleuniger usw. Vorzugsweise enthalten erfindungsgemäße Zusammensetzungen jedoch keine Halogenverbindungen, und sie enthalten vorzugsweise keine anderen Polyester als solche, welche unter die unten genannte Definition von Komponente B fallen.

Komponente A der erfindungsgemäßen Zusammensetzungen ist ein Triester der Orthophosphorsäure. Das heißt alle 3 Hydroxygruppen der Orthophosphorsäure O = P(OH)₃ sind mit alkoholischen Verbindungen verestert. Diese 3 Alkoholeinheiten können von gleicher oder von verschiedener Art sein. Vorzugsweise sind alle 3 Alkoholeinheiten aus einwertigen oder zweiwertigen aromatischen Alkoholen ausgewählt. Besonders gut geeignet als Alkoholeinheiten der Phosphorsäuretriester sind Phenol und Resorcin. Eine besonders bevorzugte Ausführungsform erfindungsgemäßer Zusammensetzungen ist dadurch gekennzeichnet, dass Komponente A eine Verbindung der Formel (I) oder der Formel (II) oder ein Gemisch dieser beiden Verbindungen ist. 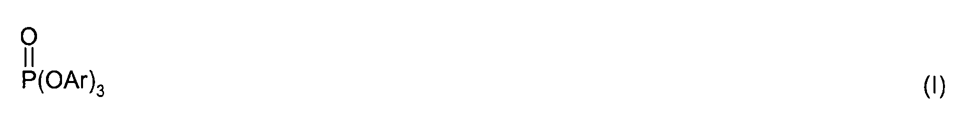 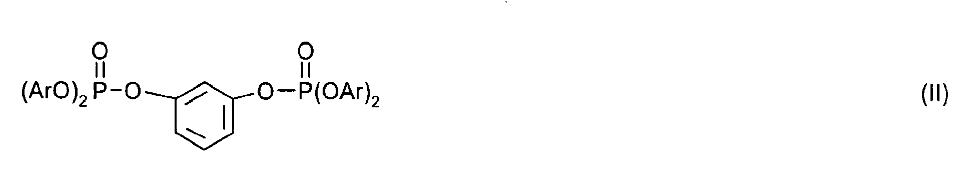 wobei Ar für einen einwertigen aromatischen Rest, vorzugsweise für den Phenylrest steht. Diejenige Verbindung der Formel (II), bei der Ar = Phenyl ist, die im Folgenden "RDP" genannt wird, ist auf dem Markt erhältlich und kann gemäß der Lehre der US 5 457 221 hergestellt werden.
An Stelle der genannten bevorzugten Triester, die aromatische Reste enthalten oder zusätzlich hierzu können erfindungsgemäße Zusammensetzungen auch Triester der Orthophosphorsäure enthalten, in welchen keine aromatischen Reste enthalten sind. Als Beispiel sei Tri-n-butylphosphat erwähnt.

Komponente B der erfindungsgemäßen Zusammensetzungen ist ein Polyester, der aus von Säure und Alkohol stammenden Einheiten aufgebaut ist. Von großer Bedeutung ist es, dass die vom Alkohol stammenden Einheiten keine aromatischen Reste enthalten. Andernfalls ist keine optimale flammhemmende Wirkung bei ausgerüsteten Textilien zu erzielen und/oder es resultieren andere Nachteile.

Vorzugsweise enthalten die als Komponente B verwendeten Polyester überhaupt keine aromatischen Reste, vorzugsweise ist also auch die von der Säure stammende Einheit frei von aromatischen Resten. Im Gegensatz zur Alkoholeinheit kann die Säureeinheit jedoch kleinere Anteile an aromatischen Resten enthalten. Der Anteil an aromatische Reste enthaltenden Säureeinheiten im Polyester darf jedoch 10 %, bezogen auf die Gesamtzahl der von der Säure stammenden Einheiten, nicht übersteigen.

Eine besonders bevorzugte Ausführungsform erfindungsgemäßer Zusammensetzungen ist dadurch gekennzeichnet, dass Komponente B ein Polyester ist, der aus einer aliphatischen α, ω-Dicarbonsäure und einem aliphatischen zweiwertigen oder mehrwertigen Alkohol aufgebaut ist, wobei vorzugsweise sich an jedem der beiden Kettenenden des zweiwertigen oder mehrwertigen Alkohols je eine Hydroxygruppe befindet.
Im Rahmen der hier genannten bevorzugten Ausführungsform sind vor allem solche aliphatische α, ω-Dicarbonsäuren gut als Säuren geeignet, die 4 bis 10 Kohlenstoffatome aufweisen, insbesondere unverzweigte Dicarbonsäuren der genannten Art. Besonders gute Ergebnisse lassen sich erzielen, wenn der als Komponente B verwendete Polyester aus Adipinsäure und Alkohol aufgebaut ist.
Die Alkoholeinheit der als Komponente B geeigneten Polyester stammt vorzugsweise von einem aliphatischen zweiwertigen oder mehrwertigen Alkohol, der an jedem der beiden Kettenenden je eine Hydroxygruppe aufweist. Der zwei- oder mehrwertige Alkohol kann hierbei verzweigt oder linear aufgebaut sein. Gut geeignet als Alkohol für die Polyester sind unter anderem Ethylenglykol, 1,3-Propylenglykol, 1,4-Butandiol, Diethylenglykol, Triethylenglykol, Polyethylenglykol, Neopentylglykol und 1,6-Hexandiol.

Die Polyester, welche als Komponente B verwendet werden, können, wie beschrieben, aus einer Dicarbonsäure und einem aliphatischen zwei- oder mehrwertien Alkohol aufgebaut sein. Eine andere Möglichkeit besteht darin, Polyester zu verwenden, welche sich von Hydroxycarbonsäuren ableiten, vorzugsweise von ω-Hydroxy-1-carbonsäuren, bei denen also die Säure- und die Alkoholeinheit im gleichen Molekül vorliegen. Bei der Herstellung der entsprechenden Polyester kann man von der ω-Hydroxy-1-carbonsäure oder von deren Lacton ausgehen. Bevorzugt sind unter den genannten Polyestern solche, die sich von Caprolacton ableiten.
Die als Komponente B geeigneten Polyester können aus einer einzigen Art von Carbonsäuren und einer einzigen Art von Alkohol aufgebaut sein. Sie können jedoch auch aus mehreren unterschiedlichen Arten von Carbonsäuren und/oder Arten von Alkoholen aufgebaut sein. Vorzugsweise sind hierbei alle verwendeten Carbonsäuren und alle verwendeten Alkohole aus den oben aufgeführten Verbindungsklassen ausgewählt. Gut geeignet als Komponente B sind auch Polyester, die sich aus einem Gemisch von Caprolacton und mehrwertigem Alkohol, z.B. Neopentylglykol, ableiten.

Vorzugsweise liegt das Molekulargewicht des als Komponente B verwendeten Polyesters im Bereich von 200 bis 8000. Besonders gut geeignet sind Polyester mit einem Molekulargewicht im Bereich von 500 bis 4000.

Das Mengenverhältnis von Komponente A zu Komponente B in erfindungsgemäßen Zusammensetzungen kann in weiten Bereichen variiert werden. Für die Erzielung guter flammhemmender Effekte auf ausgerüsteten Fasermaterialien wählt man zweckmäßigerweise ein Gewichtsverhältnis von A zu B im Bereich von 0,8 : 1 bis 1,5 : 0,4, vorzugsweise im Bereich von 1,2 : 1 bis 1,5 : 0,5.

Die Herstellung erfindungsgemäßer Zusammensetzungen kann im allgemeinen in einfacher Weise durch Vermischen der einzelnen Komponenten erfolgen, gegebenenfalls bei etwas erhöhter Temperatur und/oder mechanischer Homogenisierung.
Für eine Reihe von Anwendungszwecken ist es von Vorteil, wenn erfindungsgemäße Zusammensetzungen in gelöster oder dispergierter Form eingesetzt werden. Hierfür kommen vor allem entweder Lösungen in organischen Lösungsmitteln oder wässrige Dispersionen in Betracht, wobei zur Dispergierung in Wasser einer oder mehrere Dispergatoren verwendet werden. Geeignete Dispergatoren sind aus dem Fachmann bekannten Produkten auswählbar, z.B. eignen sich nichtionogene ethoxilierte Verbindungen.
Das Aufbringen erfindungsgemäßer Zusammensetzungen in reiner oder gelöster oder dispergierter Form auf Fasermaterialien kann nach Methoden erfolgen, wie sie dem Fachmann für Textilausrüstung oder -färbung bekannt sind. Hier sind unter anderem zu nennen Foulardverfahren oder Applikation im Ausziehverfahren. Vielfach ist eine besonders vorteilhafte Methode der Applikation möglich, die darin besteht, eine erfindungsgemäße Zusammensetzung und Farbstoff in einem einzigen Arbeitsgang auf die Fasermaterialien aufzubringen.

Die Menge an erfindungsgemäßer Zusammensetzung, welche auf das Fasermaterial aufgebracht wird, kann in dem Bereich liegen, der dem Fachmann auf dem Gebiet der flammhemmenden Ausrüstung bekannt ist. Nach der Applikation können die Fasermaterialien unter allgemein bekannten Bedingungen getrocknet und gegebenenfalls bei weiter erhöhter Temperatur behandelt werden.

Die Erfindung wird nunmehr durch Ausführungsbeispiele veranschaulicht.

### Beispiel 1

Ein Gewebe aus 100 % Polyethylenterephthalat vom Quadratmetergewicht 310 g wurde in mehrere Muster aufgeteilt und jedes Muster mit einer der folgenden Lösungen behandelt:

### Reihe a) (Vergleichsreihe) nicht erfindungsgemäß:

RDP (siehe Formel II), oben), Lösung von 2,5 bis 6,0 Gew% RDP in Methanol aufsteigend in 0,5 %-Schritten (8 Lösungen).
Das jeweilige Gewebe wurde in die entsprechende Lösung getaucht und auf etwa 100 Gew% Naßaufnahme abgequetscht. Es wurde 10 Minuten bei Raumtemperatur und anschließend
10 Minuten bei 110°C mit heißer Luft getrocknet. Die Muster wurden einem Brenntest gemäß DIN 54336 (Ausgabe November 1986), Kantenbeflammung mit 3 Sekunden Beflammzeit unterzogen. Dabei wurde festgestellt, dass nur die Muster ab etwa 5 % RDP-Auflage (Menge an RDP auf Gewebe in Gew%) aufwärts eine Nachbrennzeit von 0 Sekunden aufwiesen, während die übrigen Muster den Brenntest nicht bestanden.

### Reihe b) (erfindungsgemäß):

RDP und LUPRAPHEN^{®} 1010 in Gew.-Verhältnis 1:1 in Methanol von 4 bis 12 % in 1 %-Schritten aufsteigend (8 Lösungen).
Das jeweilige Gewebe wurde ebenfalls in die entsprechende Lösung getaucht und auf etwa 100 Gew% Naßaufnahme abgequetscht. Es wurde 10 Minuten bei Raumtemperatur und anschließend 10 Minuten bei 110°C mit heißer Luft getrocknet. Die Muster wurden einem Brenntest gemäß DIN 54336, Kantenbeflammung mit 3 Sekunden Beflammzeit unterzogen. Dabei wurde festgestellt, dass bereits alle Muster ab 2,5 % RDP-Auflage aufwärts eine Nachbrennzeit von 0 Sekunden aufwiesen, d.h. bei einem wesentlich niedrigeren Phosphorgehalt als im Fall von Reihe a).

### (LURAPHEN^{®} 1010 ist ein difunktionelles aliphatisches Polyesterpolyol mit Molgewicht - 1000, der BASF-Gruppe)

### Beispiel 2

Ein Textilmuster aus 100 % Polyethylenterephthalat, Maschenware Trikot (ca. 200 - 205 g/m²) fixiert mit 180° 30" ohne opt. Aufheller wurde in mehrere Muster aufgeteilt und jedes Muster mit einer der folgenden Lösungen behandelt:

### Reihe a) (Vergleichsreihe, nicht erfindungsgemäß):

RDP in Methyl-isobutyl-keton, 2,5 bis 6,0 %ige-Lösungen, aufsteigend in 0,5 %-Schritten (8 Lösungen).
Das jeweilige Textilmuster wurde in die entsprechende Lösung getaucht und auf etwa 100 Gew% Naßaufnahme abgequetscht. Es wurde 10 Minuten bei Raumtemperatur und anschließend 10 Minuten bei 110°C mit heißer Luft getrocknet. Die Muster wurden einem Brenntest gem. DIN 54336, Kantenbeflammung mit 3 Sekunden Beflammzeit unterzogen. Dabei wurde festgestellt, dass nur die Muster ab etwa 4,5 % RDP-Auflage aufwärts eine Nachbrennzeit von 0 Sekunden aufwiesen.

### Reihe b) (erfindungsgemäß):

RDP und CAPA^{®} 2200 in Gew.-Verhältnis 0,7 : 0,3 in Methyl-isobutyl-keton von 2,5 bis 6,5 % in 1 %-Schritten aufsteigend (9 Lösungen).

Das jeweilige Textilmuster wurde in die entsprechende Lösung getaucht und auf etwa 100 Gew% Naßaufnahme abgequetscht. Es wurde 10 Minuten bei Raumtemperatur und anschließend 10 Minuten bei 110°C mit heißer Luft getrocknet. Die Muster wurden einem Brenntest gem. DIN 54336, Kantenbeflammung mit 3 Sekunden Beflammzeit unterzogen. Dabei wurde fest-gestellt, dass bereits alle Muster ab 3 % RDP-Auflage aufwärts eine Nachbrennzeit von 0 Sekunden aufwiesen, dass also bereits bei einem niedrigeren Phosphorgehalt auf dem Textil im Vergleich zu Reihe a) kein Nachbrennen auftrat.

CAPA^{®} 2200 ist ein Polymer (Molgewicht ~ 2000) auf Basis von Caprolacton und Neopentylglykol der Fa. SOLVAY.

### Beispiel 3

Ein Textilmuster aus 100 % Polyethylenterephthalat, Maschenware Trikot (ca. 200 - 205 g/m²) fixiert mit 180° 30" ohne opt. Aufheller wurde in zwei Muster aufgeteilt und jedes Muster mit einer der folgenden Lösungen behandelt:

### a) Vergleichsversuch (nicht erfindungsgemäß):

### 7 g Tributylphosphat in 60 g Methyl-isobutyl-keton.

Das jeweilige Textilmuster wurde in die entsprechende Lösung getaucht und auf etwa 100 Gew% Naßaufnahme abgequetscht. Es wurde 10 Minuten bei Raumtemperatur und anschließend 10 Minuten bei 110°C mit heißer Luft getrocknet. Die Muster wurden einem Brenntest gem. DIN 54336, Kantenbeflammung mit 3 Sekunden Beflammzeit unterzogen. Dabei wurde festgestellt, dass das Muster den Brenntest nicht bestand, d.h. die Flamme kam nicht zum Erlöschen.

### b) (erfindungsgemäß):

### 7 g Tributylphosphat und 3 g CAPA^{®} 2200 in 60 Methyl-isobutyl-keton.

Das jeweilige Textilmuster wurde in die entsprechende Lösung getaucht und auf etwa 100 Gew% Naßaufnahme abgequetscht. Es wurde 10 Minuten bei Raumtemperatur und anschließend 10 Minuten bei 110°C mit heißer Luft getrocknet. Die Muster wurden einem Brenntest gem. DIN 54336, Kantenbeflammung mit 3 Sekunden Beflammzeit unterzogen. Dabei wurde festgestellt, dass dieses Muster eine Nachbrennzeit von 0 Sekunden aufwies, den Brenntest also bestand.

## Patentansprüche

1. Zusammensetzung, welche mindestens eine Komponente A und eine Komponente B enthält,
wobei Komponente A ein Triester der Phosphorsäure ist,
und wobei Komponente B ein Polyester ist, welcher keine aromatischen Reste in der vom Alkohol stammenden Einheit enthält und wobei 0 bis 10 % der von der Säure stammenden Einheiten aromatische Reste enthalten.

2. Zusammensetzung nach Anspruch 1, **dadurch gekennzeichnet, dass** Komponente A ein Triester ist, welcher aufgebaut ist aus Einheiten, die sich von Phosphorsäure ableiten und Einheiten, die sich aus ein- oder zweiwertigen aromatischen Alkoholen ableiten.

3. Zusammensetzung nach Anspruch 1 oder 2, **dadurch gekennzeichnet, dass** Komponente A eine Verbindung der Formel (I) oder der Formel (II) oder ein Gemisch dieser beiden Verbindungen ist. 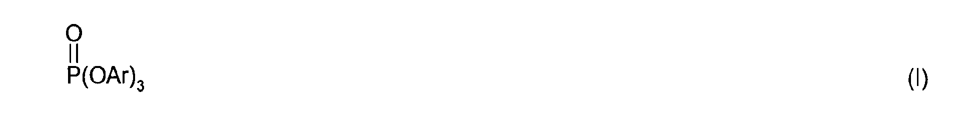 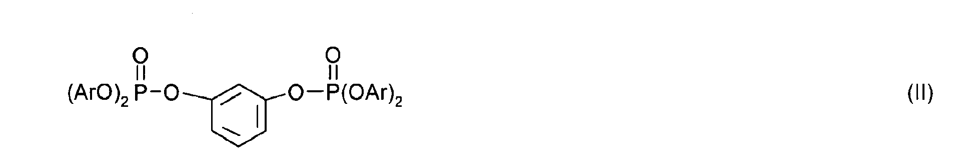 wobei Ar für einen einwertigen aromatischen Rest, vorzugsweise für den Phenylrest steht.

4. Zusammensetzung nach einem oder mehreren der Ansprüche 1 bis 3, **dadurch gekennzeichnet, dass** Komponente B ein Polyester ist, der aus einer aliphatischen α, ω-Dicarbonsäure und einem aliphatischen zweiwertigen oder mehrwertigen Alkohol aufgebaut ist, wobei vorzugsweise sich an jedem der beiden Kettenenden des zweiwertigen oder mehrwertigen Alkohols je eine Hydroxygruppe befindet.

5. Zusammensetzung nach Anspruch 4, **dadurch gekennzeichnet, dass** die aliphatische Dicarbonsäure 4 bis 10 Kohlenstoffatome aufweist.

6. Zusammensetzung nach Anspruch 5, **dadurch gekennzeichnet, dass** die Dicarbonsäure Adipinsäure ist.

7. Zusammensetzung nach einem oder mehreren der Ansprüche 4 bis 6, **dadurch gekennzeichnet, dass** der aliphatische Alkohol ausgewählt ist aus Ethylenglykol, 1,3-Propylenglykol, 1,4-Butandiol, Diethylenglykol, Triethylenglykol, Polyethylenglykol, Neopentylglykol und 1,6-Hexandiol.

8. Zusammensetzung nach einem oder mehreren der Ansprüche 1 bis 3, **dadurch gekennzeichnet, dass** Komponente B ein Polyester ist, der sich von einer ω-Hydroxy-1-carbonsäure oder deren Lacton ableitet, vorzugsweise von Caprolacton.

9. Zusammensetzung nach einem oder mehreren der Ansprüche 1 bis 8, **dadurch gekennzeichnet, dass** Komponente B ein Molekulargewicht im Bereich von 200 bis 8000, vorzugsweise von 500 bis 4000, besitzt.

10. Zusammensetzung nach einem oder mehreren der Ansprüche 1 bis 9, **dadurch gekennzeichnet, dass** das Gewichtsverhältnis von Komponente A zu Komponente B im Bereich von 0,8 : 1 bis 1,5 : 0,4 liegt, vorzugsweise im Bereich von 1,2 : 1 bis 1,5 : 0,5.

11. Verfahren zur Behandlung von Fasermaterialien, wobei man auf das Fasermaterial eine Zusammensetzung gemäß einem oder mehreren der Ansprüche 1 bis 10 aufbringt.

12. Verfahren nach Anspruch 11, **dadurch gekennzeichnet, dass** das Fasermaterial zu 80 bis 100 Gew% aus Polyester besteht.
